# EUROPÄISCHE PATENTANMELDUNG

(11) **EP 4 696 435 A1**
(43) Veröffentlichungstag der Anmeldung: **18.02.2026**
(21) Anmeldenummer: 25192094.8
(22) Anmeldetag: 28.07.2025
(51) Int. Cl.: B22F 10/73, B29C 64/357, B33Y 40/20, B29C 64/153, B29C 64/35

(54) **VORRICHTUNG ZUM ENTPULVERN**

(30) Priorität: 12.08.2024 DE 102024122985
(71) Anmelder: Rösler Holding GmbH, 96231 Bad Staffelstein (DE)
(72) Erfinder: MÜLLER, Florian, 96106 Ebern (DE); ZEITLER, Dominique, 96182 Reckendorf (DE)
(74) Vertreter: Manitz Finsterwald Patent- und Rechtsanwaltspartnerschaft mbB

(57) **Zusammenfassung**

Eine Entpulverungsvorrichtung weist eine absenkbare Vibrationsplattform sowie eine Siebeinrichtung auf. Zum Abführen des Pulvers sind Pumpen vorgesehen, die abgelöstes Pulver in einen Sammelbehälter überführen.

## Beschreibung

Die Erfindung betrifft eine Vorrichtung zum Entpulvern von additiv gefertigten Bauteilen, mit der abgelöstes Pulver aufbereitet und in einen Behälter dosiert werden kann.

Für das Entpulvern bzw. Auspacken von additiv, beispielsweise im SAF-, MJF- oder SLS- Verfahren, gefertigten Bauteilen müssen die Einzelteile aus dem jeweiligen Baujob (Pulverkuchen) entnommen werden. Dies kann manuell mit Hilfe einer Ausdrückhilfe erfolgen, welche den Baujob aus seiner Transportbox heraus befördert. Anschließend können die Bauteile händisch z.B. mit Bürsten oder ähnlichen Handwerkzeugen entpulvert werden. Das abgelöste Pulver kann dann aufbereitet und wiederverwendet werden.

Es ist die Aufgabe der vorliegenden Erfindung, eine Vorrichtung zum Entpulvern von additiv gefertigten Bauteilen zu schaffen, mit der ein automatisiertes und effizientes Entpulvern sowie ein Rückgewinnen von wieder verwendbarem Pulver möglich ist.

Die Lösung dieser Aufgabe erfolgt durch die Merkmale des Anspruchs 1 und insbesondere durch eine Vorrichtung mit einer absenkbaren Vibrationsplattform mit einem Pulversammler und eine mit dem Pulversammler in Fluidverbindung stehende Siebeinrichtung. Mit der Siebeinrichtung steht eine Aufnahme für einen Sammelbehälter für gesiebtes Pulver in Fluidverbindung, wobei zwei Pumpeinrichtungen vorgesehen sind. Eine erste Pumpeinrichtung zieht Pulver von dem Pulversammler zu der Siebeinrichtung ab, während eine zweite Pumpeinrichtung Pulver von der Siebeinrichtung zu der Aufnahme abzieht.

Mit der erfindungsgemäßen Vorrichtung lassen sich additiv gefertigte Bauteile höchst effizient entpulvern, indem diese auf die Vibrationsplattform aufgebracht werden und die Vibrationsplattform anschließend in Schwingungen versetzt wird. Hierdurch löst sich das Pulver von dem Pulverkuchen und strömt in den Pulversammler, der beispielsweise als Sammeltrichter ausgebildet sein kann. Mit Hilfe der ersten Pumpeinrichtung kann dieses Pulver dann von dem Pulversammler zu der Siebeinrichtung abgezogen werden, so dass das Pulver in der Siebeinrichtung gesiebt werden kann. Mit Hilfe der zweiten Pumpeinrichtung kann das gesiebte Pulver schließlich von der Siebeinrichtung zu der Aufnahme abgezogen werden, so dass das Pulver dort in einen in der Aufnahme aufgenommenen Sammelbehälter abgefüllt werden kann. Auf diese Weise ist nicht nur ein sehr kostengünstiges und schnelles Entpulvern, sondern auch ein effizientes Rückgewinnen von Pulver möglich, das von den Bauteilen entfernt und durch das Sieben aufbereitet worden ist.

Vorteilhafte Ausführungsformen der Erfindung sind in der Beschreibung, der Zeichnung sowie den Unteransprüchen beschrieben.

Nach einer ersten vorteilhaften Ausführungsform kann die Vorrichtung auf einem Fahrgestell montiert sein. Hierdurch lässt sich die gesamte Anlage innerhalb eines Gebäudes auf einfache Weise transportieren, d.h. es ist eine mobile Anlage geschaffen, die je nach Anforderung platziert werden kann.

Nach einer weiteren vorteilhaften Ausführungsform kann in der Fluidverbindung zwischen Pulversammler und Siebeinrichtung ein Fliehkraftabscheider angeordnet sein. Mit Hilfe eines solchen Fliehkraftabscheiders kann das aus dem Pulversammler abgezogene Pulver von dem durch die erste Pumpeinrichtung erzeugten Luftstrom getrennt werden, so dass dieses an die Siebeinrichtung übergeben werden kann.

Nach einer weiteren vorteilhaften Ausführungsform kann die erste Pumpeinrichtung eine Vakuumpumpe und die zweite Pumpeinrichtung eine Pulverpumpe sein. In diesem Fall wird durch die Vakuumpumpe die für einen effizienten Pulvertransport erforderliche Luftströmung erzeugt, während die als Feststoffpumpe ausgeführte Pulverpumpe dazu verwendet wird, das bereits gesiebte Pulver in die Aufnahme und von dort in den Sammelbehälter zu leiten.

Nach einer weiteren vorteilhaften Ausführungsform kann die Aufnahme eine Wägeeinrichtung umfassen, mit der das Gewicht eines Sammelbehälters detektierbar ist. Auf diese Weise lässt sich der Füllgrad des Sammelbehälters ermitteln, so dass ein weiteres Befüllen zu einem geeigneten Zeitpunkt gestoppt werden kann. Auch lässt sich mit Hilfe der Wägeeinrichtung feststellen, wenn das Gewicht des in der Aufnahme befindlichen Sammelbehälters nicht mehr zunimmt, so dass daraufhin beispielsweise der Entpulverungsvorgang gestoppt werden kann. Schließlich lässt sich mit Hilfe der Wägeeinrichtung auch ein gewünschter maximaler Füllgrad des Sammelbehälters einstellen, so dass der mit recyceltem Pulver teilweise gefüllte Sammelbehälter noch vollständig mit frischem Pulver befüllt werden kann.

Nach einer weiteren vorteilhaften Ausführungsform weist die Vorrichtung einen Anschluss für einen Frischpulverbehälter auf, wobei der Anschluss über eine durch ein Ventil absperrbare Fluidverbindung mit der zweiten Pumpeinrichtung verbunden ist. Bei dieser Ausführungsform kann ein Frischpulverbehälter mit frischem Pulver an den Anschluss angeschlossen werden, so dass frisches Pulver mit Hilfe der zweiten Pumpeinrichtung in den Sammelbehälter gepumpt werden kann. Im Entpulverungsbetrieb kann die Fluidverbindung durch das Ventil abgesperrt werden.

Nach einer weiteren vorteilhaften Ausführungsform kann die Vorrichtung einen Frischpulverbehälter umfassen, der auf einem eigenen Fahrgestell montiert ist, und der mit dem Anschluss verbunden ist. Bei dieser Ausführungsform ist eine sehr flexible Anlage geschaffen, da das Fahrgestell des Frischpulverbehälters einen schnellen effizienten Austausch ermöglicht, wenn ein Frischpulverbehälter vollständig geleert worden ist.

Nach einer weiteren vorteilhaften Ausführungsform kann die Siebeinrichtung ein Ventil aufweisen, mit dem die Fluidverbindung zu der zweiten Pumpeinrichtung absperrbar ist. Hierdurch kann die Fluidverbindung zu dem Pulversammler geschlossen werden, wenn Frischpulver aus einem Frischpulverbehälter in den Sammelbehälter gepumpt werden soll.

Nach einer weiteren vorteilhaften Ausführungsform kann die Vibrationsplattform in einem Schacht angeordnet sein, wobei sich an einer insbesondere rückwärtigen Schachtwand eine Absaugöffnung befindet, die mit der ersten Pumpeinrichtung in Fluidverbindung steht. Bei dieser Ausführungsform wird gelöstes Pulver nicht nur durch den Pulversammler abgesaugt, sondern auch durch eine Wandöffnung im Entpulverungsraum selbst, so dass sich keine größeren Pulvermengen am Boden der Vibrationsplattform ansammeln.

Nach einer weiteren vorteilhaften Ausführungsform kann zwischen der Aufnahme und dem Pulversammler eine eigene Fluidverbindung vorhanden sein, so dass zwischen der Aufnahme des Sammelbehälters und dem Pulversammler eine Absaugströmung erzeugt wird, die beim Befüllen des Sammelbehälters Pulverstaub aus dem Bereich der Aufnahme abzieht.

Nach einer weiteren vorteilhaften Ausführungsform kann die Siebeinrichtung mit der ersten Pumpeinrichtung über eine durch ein Ventil absperrbare Fluidverbindung in Verbindung stehen, in der ein Fliehkraftabscheider angeordnet ist, der insbesondere mit einem Abfallbehälter versehen ist. Bei dieser Ausführungsform können mit Hilfe der ersten Pumpeinrichtung Pulverrückstände wie Verklumpungen und dergleichen von der Oberseite des Siebes der Siebeinrichtung abgesaugt und in einen Abfallbehälter übergeben werden, wenn dies erforderlich ist.

Nach einer weiteren vorteilhaften Ausführungsform kann die Siebeinrichtung mit einer Vibrationseinrichtung und/oder einem Ultraschallerzeuger versehen sein, um das Sieb in hochfrequente Schwingungen zu versetzen, und ein konstantes Sieben zu gewährleisten.

Nach einer weiteren vorteilhaften Ausführungsform kann in einer Fluidverbindung zwischen dem Pulversammler und der ersten Pumpeinrichtung ein Absperrventil vorgesehen sein. Dies ermöglicht ein Umschalten auf die vorstehend genannte Betriebsart, bei der Rückstände von der Oberfläche des Siebes abgezogen werden.

Nach einer weiteren vorteilhaften Ausführungsform können sämtliche Pulver führenden Bauteile geerdet sein. Hierdurch wird eine durch Reibung entstehende statische Aufladung verhindert.

Nach einer weiteren vorteilhaften Ausführungsform kann die Vorrichtung eine Steuerung aufweisen, mit der die erste und die zweite Pumpeinrichtung in Abhängigkeit von einem Ausgangssignal der Wägeeinrichtung steuerbar sind. Dies ermöglicht die eingangs bereits erwähnten verschiedenen Betriebsarten sowie die Einstellung eines gewünschten Mischungsverhältnisses zwischen wiedergewonnenem und frischem Pulver.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: ein Schemadiagramm einer Vorrichtung zum Entpulvern;
- Fig. 2: eine perspektivische Vorderansicht der Vorrichtung;
- Fig. 3: eine perspektivische Rückansicht der Vorrichtung von Fig. 2;
- Fig. 4: eine geschnittene Ansicht einer Aufnahme mit Sammelbehälter; und
- Fig. 5: eine geschnittene Ansicht einer Siebeinrichtung.

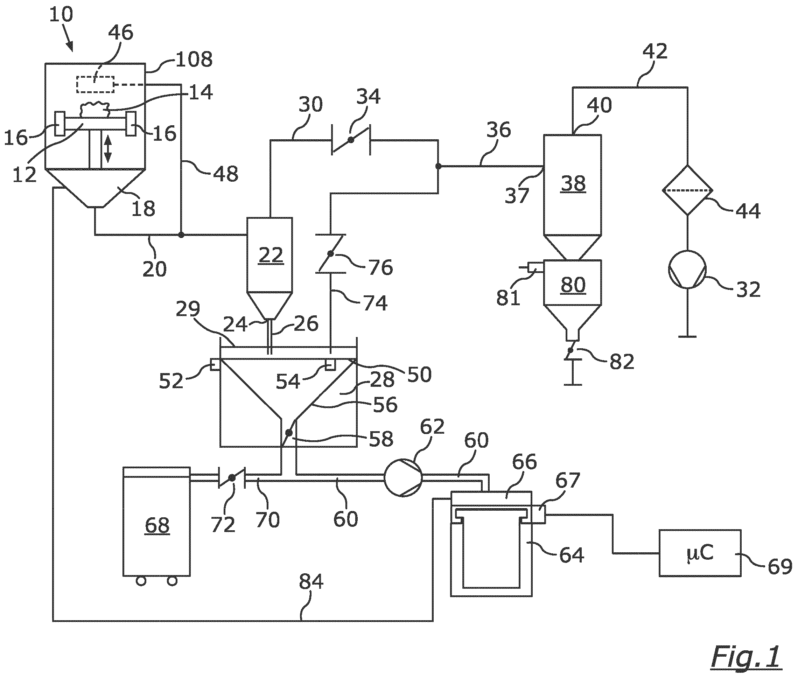

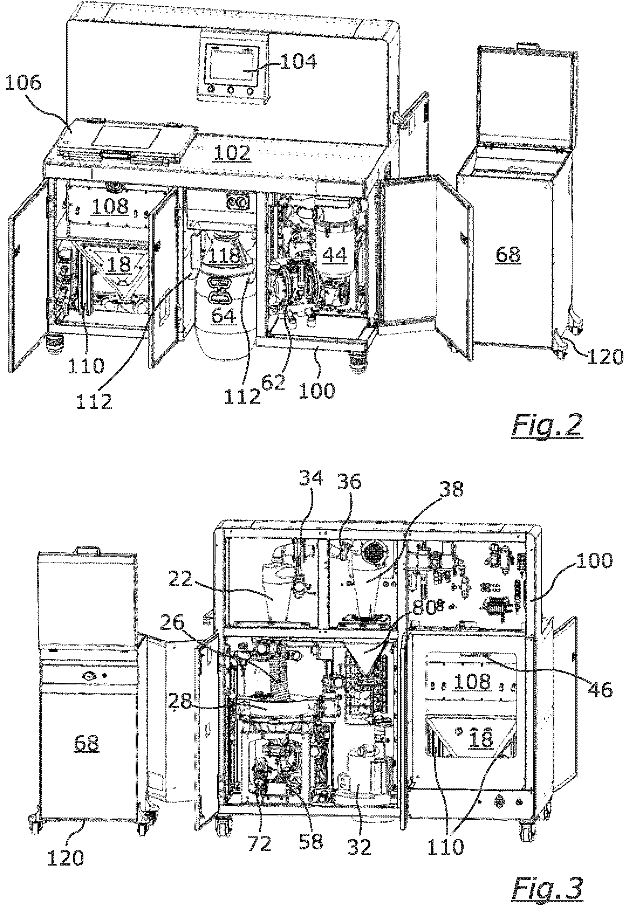

In Fig. 1 sind die wesentlichen Komponenten der in Fig. 2 und Fig. 3 dargestellten Vorrichtung zum Entpulvern von additiv gefertigten Bauteilen schematisch dargestellt. Die Vorrichtung umfasst eine Entpulverungsstation 10 mit einer absenkbaren Vibrationsplattform 12, in der zu entpulvernde additiv gefertigte Bauteile angeordnet sind. Die Vibrationsplattform 12 kann beispielsweise mit Vibrationsantrieben 16 versehen und perforiert sein, so dass gelöstes Pulver in einen Pulversammler 18 gelangen kann, der bei dem dargestellten Ausführungsbeispiel als Sammeltrichter ausgeführt ist. Die Vibrationsplattform 12 ist in einem Schacht 108 der Entpulverungsstation 10 angeordnet, der an einer rückwärtigen Seitenwand eine Absaugöffnung 46 aufweist, die über eine Fluidleitung 48 mit einer Fluidleitung 20 verbunden ist, so dass durch die Absaugöffnung 46 Pulver abgezogen werden kann.

Der Pulversammler 18 ist am unteren Ende seines Sammeltrichters über eine Fluidleitung 20 mit einem ersten Fliehkraftabscheider 22 verbunden, dessen unterer Produktaustritt 24 über eine Fluidleitung 26 mit einer Siebeinrichtung 28 in Verbindung steht. Die Transportluft des ersten Fliehkraftabscheiders 22 wird über eine Fluidleitung 30 von der Oberseite des ersten Fliehkraftabscheiders 22 zu einer ersten Pumpeinrichtung 32 in Form einer Vakuumpumpe (z.B. Seitenkanalverdichter) geführt, wobei in der Fluidleitung 30 ein Absperrventil 34 angeordnet ist. Das Absperrventil 34 ist über eine Fluidleitung 36 mit einem Lufteintritt 37 eines zweiten Fliehkraftabscheiders 38 verbunden, dessen oberer Transportluftanschluss 40 über eine Fluidleitung 42 mit der ersten Pumpeinrichtung 32 verbunden ist. Zwischen dem zweiten Fliehkraftabscheider 38 und der ersten Pumpeinrichtung 32 befindet sich ein Feinstaubfilter 44.

Zum Entpulvern wird die Vibrationsplattform 12 in Schwingung versetzt und die erste Pumpeinrichtung 32 wird aktiviert, so dass diese einen Luftstrom erzeugt, der gelöstes Pulver von dem Pulversammler 18 über die Fluidleitung 20 zu dem ersten Fliehkraftabscheider 22 fördert. Dort wird das Pulver von dem Luftstrom abgeschieden und strömt durch die Fluidleitung 26 zu der Siebeinrichtung 28.

Die Siebeinrichtung 28 weist ein Feinsieb 50 auf, welches dazu dient, das durch die Fluidleitung 26 zugeführte Pulver zu sieben. Hierzu ist das Feinsieb 50 mit einer Vibrationseinrichtung 52 und/oder einer Ultraschalleinrichtung 54 ausgestattet, um den Siebvorgang zu unterstützen. Das gesiebte Pulver gelangt anschließend in einen Sammeltrichter 56, an dessen Ausgang ein Absperrventil 58 vorgesehen ist. Über eine Fluidleitung 60, in der eine zweite Pumpeinrichtung 62 angeordnet ist, kann das gesiebte Pulver in einen Sammelbehälter 64 überführt werden, der in einer Aufnahme 66 aufgenommen ist.

Weiterhin kann ein Frischpulverbehälter 68 vorgesehen sein, der über eine weitere Fluidleitung 70 mit der Fluidleitung 60 in Verbindung steht. In der Fluidleitung 70 ist ein weiteres Absperrventil 72 vorhanden, das im Entpulverungsbetrieb geschlossen werden kann. Zum Zuführen von frischem Pulver wird das Absperrventil 58 geschlossen und das Absperrventil 72 geöffnet, so dass frisches Pulver aus dem Frischpulverbehälter 68, die Fluidleitung 70, die Fluidleitung 60 und die zweite Pumpeinrichtung 62, die beispielsweise als Membranpumpe ausgebildet sein kann, in die Aufnahme 66 und von dort in den Sammelbehälter 64 überführt wird.

Schließlich ist zur Reinigung der Oberfläche des Feinsiebs 50 mit der Siebeinrichtung 28 eine Fluidleitung 74 verbunden, die in die Fluidleitung 36 geführt ist, wobei in der Fluidleitung 74 ein Absperrventil 76 angeordnet ist. Die Fluidleitung 74 mündet oberhalb der Oberfläche des Feinsiebs 50 und in einen Zwischenraum zwischen Feinsieb 50 und einem perforierten Deckel 29 der Siebeinrichtung 28, so dass durch Betrieb der ersten Pumpeinrichtung 32 bei geschlossenem Absperrventil 34 und geöffnetem Absperrventil 76 Pulverrückstände von dem Feinsieb 50 abgezogen und in den zweiten Fliehkraftabscheider 38 überführt werden können. Von dort gelangen die Rückstände in einen Abfallbehälter 80, der unterhalb des zweiten Fliehkraftabscheiders 38 angeordnet ist. Der Produktauslass 80 des Abfallbehälters kann durch ein weiteres Absperrventil 82 verschlossen sein, das nur dann geöffnet wird, wenn der Abfallbehälter 80 geleert werden muss.

Schließlich ist eine separate Fluidleitung 84 zwischen der Aufnahme 66 und dem Pulversammler 18 vorhanden, um eine Absaugströmung zu erzeugen, die Pulverstaub aus dem Schacht 108 der Entpulverungsstation 10 absaugt.

Wie Fig. 1 ferner verdeutlicht, ist die Aufnahme 66 mit einer Wägeeinrichtung 67 versehen, die das Gewicht eines in der Aufnahme 66 angeordneten Sammelbehälters 64 detektiert und das detektierte Gewicht an eine nur schematisch dargestellte Steuerung 69 übergibt, mit der sämtliche Pumpen und Absperrventile sowie die weitere elektrische Aggregate verbunden sind.

Fig. 2 und 3 zeigen jeweils eine perspektivische Vorderansicht und Rückansicht der vorstehend beschriebenen Vorrichtung. Diese ist auf einem Fahrgestell 100 montiert, das mit Rollen versehen sein kann und das ein Grundgestell für die Entpulverungsvorrichtung bildet. Auf dem Grundgestell befindet sich ein Tisch 102, über dem eine Bedieneinheit 104 angeordnet ist. Weiterhin befindet sich auf dem Tisch 102 eine Schwenkklappe 106, die eine in dem Tisch 102 vorhandene Öffnung verschließt, durch die ein Baujob in den Schacht 108 der Entpulverungsstation 10 eingeführt werden kann. Unter der Klappe 106 befinden sich zwei parallele Schieber, die von rechts und von links an einen Baujob angestellt werden können, um diesen zu positionieren. Zur Übergabe des Baujobs wird dieser bei geöffneter Schwenkklappe 106 auf den Tisch 102 und auf die Vibrationsplattform 12 überführt, die zu diesem Zeitpunkt so weit angehoben wurde, dass sie mit der Oberfläche des Tisches 102 fluchtet. Hierdurch wird verhindert, dass der Baujob eine Fallhöhe zurücklegt und dadurch möglicherweise beschädigt wird.

Nach Überführen des Baujobs 14 auf die Vibrationsplattform 12 wird diese mit Hilfe von Pneumatikzylindern 110 in eine untere Endposition abgesenkt, in der sich diese am oberen Rand des trichterförmigen Pulversammlers 18 befindet. Hierbei können Baujobs mit einer Höhe von über 30 cm bearbeitet werden. Anschließend kann die Schwenkklappe 106 verschlossen werden, so dass die Vibrationsantriebe 16 aktiviert werden können. Hierdurch wird die auf Gummidämpfern gelagerte Plattform 12 in Schwingungen versetzt, so dass sich Pulver von dem Baujob 14 löst und durch Öffnungen in der Vibrationsplattform 12 in den Pulversammler 18 fällt. Zusätzlich kann der Entpulverungsvorgang durch Beaufschlagen mit Druckluft unterstützt werden, die durch Düsen in das Innere des Schachtes 108 eingeleitet wird.

Um das in dem Pulversammler 18 befindliche Pulver in die Siebeinrichtung 28 zu überführen, wird die erste Pumpeinrichtung 32 aktiviert, die beispielsweise als Seitenkanalverdichter ausgeführt sein kann. Diese erzeugt einen Unterdruck in dem Strömungsweg, der durch die Fluidleitungen 20, 30, 36 und 42 gebildet ist. Gleichzeitig wird im Bereich der Ansaugöffnung 46 durch die Fluidleitung 48 Pulverstaub aus dem Schacht 108 abgesaugt.

Das derart in den ersten Fliehkraftabscheider 22 geförderte Pulver fällt durch die Fluidleitung 26 in die Siebeinrichtung 28 und dort auf das Feinsieb 50.

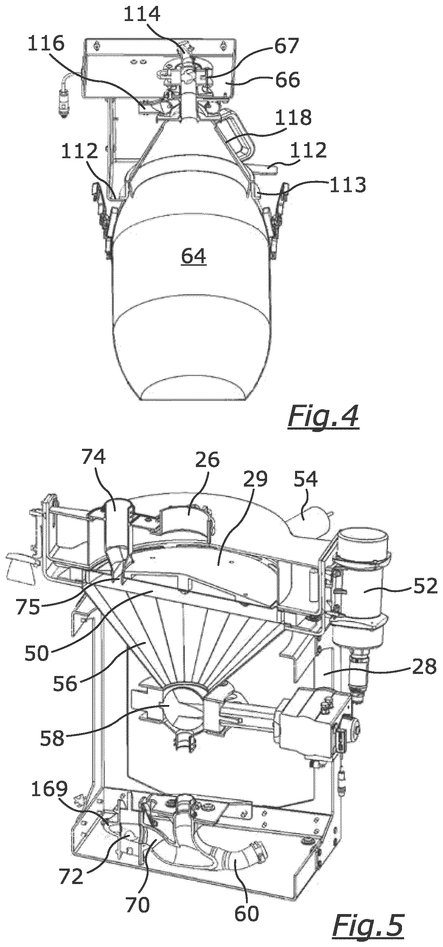

Fig. 5 zeigt eine vergrößerte und geschnittene Darstellung der Siebeinrichtung 28. Diese ist auf einem Grundrahmen aufgebaut und enthält das Feinsieb 50, das über dem Sammeltrichter 56 angeordnet ist. Das Feinsieb 50 kann mit Hilfe zumindest eines Vibrationsantriebs 52 und/oder der Ultraschalleinrichtung 54 in Schwingungen versetzt werden, so dass das durch die Fluidleitung 26 zugeführte Pulver gesiebt wird und in den Sammeltrichter 56 fällt. Bei aktivierter zweiter Pumpeinrichtung 62 wird dieses Pulver bei geschlossenem Absperrventil 72 durch die Fluidleitung 60 abgesaugt und in den Sammelbehälter 64 überführt. Fig. 5 zeigt ferner, dass im Bereich der Siebeinrichtung 28 ein Anschluss 169 vorhanden ist, an den die Fluidleitung 60 angeschlossen werden kann, die zu dem Frischpulverbehälter 68 führt. Dieser ist auf einem eigenen Fahrgestell 120 montiert und weist an der Oberseite eine Schwenkklappe auf.

Fig. 4 zeigt eine geschnittene und vergrößerte Darstellung der Aufnahme 66 mit eingeführtem Sammelbehälter 64. Wie in Fig. 4 und auch in Fig. 2 zu erkennen ist, weist die Aufnahme 66 zwei parallele Gabeln 112 auf, auf die der Sammelbehälter 64 mit seinem Umfangsflansch 113 aufgeschoben werden kann. Um diesen Vorgang zu erleichtern, ist das Grundgestell 100 an seiner Vorderseite so ausgebildet, dass im Bereich der Aufnahme 66 ein Freiraum zwischen einem Fußboden und der Aufnahme 66 vorhanden ist. Wenn der Aufnahmebehälter 64 sich auf den Gabeln 112 der Aufnahme 66 befindet, ist dieser etwas oberhalb des Fußbodens angeordnet, so dass das Gewicht des Sammelbehälters 64 mit Hilfe der Wägeeinrichtung 67 detektiert werden kann.

Das Bezugszeichen 114 in Fig. 4 bezeichnet einen Anschlussstutzen für die Fluidleitung zur zweiten Pumpeinrichtung 62. Das Bezugszeichen 116 bezeichnet einen Anschlussstutzen für die Fluidleitung 84. Schließlich ist die Aufnahme 66 mit einer kegelförmigen Haube 118 versehen, welche die Öffnung des Sammelbehälters 64 vollständig abdeckt.

Zur Reinigung des Feinsiebs 50 der Siebeinrichtung 28 ist oberhalb des Feinsiebs 50 ein Saugstutzen 75 vorgesehen, durch den Pulverklumpen und dergleichen durch die Fluidleitung 74 abgesaugt werden können. Die Fluidleitung 74 geht nach dem Absperrventil 76 in die Fluidleitung 36 über und diese mündet in den zweiten Fliehkraftabscheider 38, dessen Transportluftanschluss 40 mit der Fluidleitung 42 verbunden ist. Bei geschlossenen Absperrventilen 34 und 58 und bei geöffnetem Absperrventil 76 kann hierdurch Pulverabfall in den Fliehkraftabscheider 38 gesaugt und von dort in den darunter befindlichen Abfallbehälter 80 übergeben werden. Durch Öffnen des Absperrventils 82 kann der Abfallbehälter 80 bei Bedarf geleert werden. Um zu erkennen, wann der Abfallbehälter 80 voll ist, ist an dessen Oberseite ein Füllstandssensor angeordnet, der mit der Steuerung 69 in Verbindung steht.

Zum Entpulvern des Baujobs 14 wird dieser wie vorstehend beschrieben in die Entpulverungsstation 10 übertragen, um den Entpulverungsvorgang zu starten. Bei aktivierten Pumpen 32 und 62 wird abgelöstes Pulver von dem Pulversammler 18 in die Siebeinrichtung 28 transportiert und von dort in den Sammelbehälter 64 gepumpt. Durch das Signal der Wägeeinrichtung 67 kann dabei festgestellt werden, wenn sich das Gewicht des Sammelbehälters 64 nicht mehr erhöht. In diesem Fall ist der Entpulverungsvorgang abgeschlossen. Das Entpulvern kann jedoch auch vorher beendet werden, beispielsweise wenn der Sammelbehälter 64 ein vorbestimmtes Gewicht erreicht hat. In diesem Fall ist es möglich, durch Abschalten der ersten Pumpeinrichtung 32, durch Schließen des Absperrventils 58 und durch Öffnen des Absperrventils 72 frisches Pulver aus dem Frischpulverbehälter 68 mit Hilfe der zweiten Pumpeinrichtung 62 in den Sammelbehälter 64 zu pumpen. Hierbei lassen sich mit Hilfe der Steuerung 69 beliebige Mischungsverhältnisse einstellen.

Zum Reinigen des Feinsiebs 50 werden die Absperrventile 34 und 58 geschlossen und das Absperrventil 67 wird geöffnet, so dass mit Hilfe der ersten Pumpeinrichtung 32 Pulverrückstände von der Sieboberfläche durch die Fluidleitung 74 und 36 in den zweiten Fliehkraftabscheider 38 geführt und dort in den Abfallbehälter 80 abgeschieden werden können.

Mit der vorstehend beschriebenen Vorrichtung lässt sich auf effiziente Weise ein automatisiertes Entpulvern mit einer Pulverrückgewinnungsquote von über 90% und einer Dosiergenauigkeit zwischen wiedergewonnenem und frischem Pulver in der Größenordnung von ±75g bei einem Gesamtvolumen von bis zu 12kg eines gesamten Druckjobs erreicht. Durch das Sieben des Pulvers in der Siebeinrichtung wird zudem eine gleichbleibende Qualität gewährleistet. Da bei der vorstehend beschriebenen Vorrichtung sämtliche pulverführenden Teile geerdet sind, wird eine elektrostatische Aufladung sicher vermieden.

## Patentansprüche

1. Vorrichtung zum Entpulvern von additiv gefertigten Bauteilen, umfassend
- eine absenkbare Vibrationsplattform (12) mit einem Pulversammler (18),
- eine mit dem Pulversammler (18) in Fluidverbindung stehende Siebeinrichtung (28),
- eine mit der Siebeinrichtung (28) in Fluidverbindung stehende Aufnahme (66) für einen Sammelbehälter (64) für gesiebtes Pulver, und
- eine erste Pumpeinrichtung (32), die Pulver von dem Pulversammler (18) zu der Siebeinrichtung (28) abzieht, und
- eine zweite Pumpeinrichtung (62), die Pulver von der Siebeinrichtung (28) zu der Aufnahme (66) abzieht.

2. Vorrichtung nach Anspruch 1,
**dadurch gekennzeichnet,**
**dass** diese auf einem Fahrgestell (100) montiert ist.

3. Vorrichtung nach Anspruch 1 oder 2,
**dadurch gekennzeichnet,**
**dass** in der Fluidverbindung (20) zwischen Pulversammler (18) und Siebeinrichtung (28) ein Fliehkraftabscheider (22) angeordnet ist.

4. Vorrichtung nach einem der vorstehenden Ansprüche,
**dadurch gekennzeichnet,**
**dass** die erste Pumpeinrichtung (32) eine Vakuumpumpe und die zweite Pumpeinrichtung (62) eine Pulverpumpe ist.

5. Vorrichtung nach einem der vorstehenden Ansprüche,
**dadurch gekennzeichnet,**
**dass** die Aufnahme (66) eine Wägeeinrichtung (67) umfasst, mit der das Gewicht eines in der Aufnahme (66) befindlichen Sammelbehälters (64) detektierbar ist.

6. Vorrichtung nach einem der vorstehenden Ansprüche,
**dadurch gekennzeichnet,**
**dass** diese einen Anschluss (169) für einen Frischpulverbehälter (68) aufweist, der über eine durch ein Ventil (72) absperrbare Fluidverbindung (70) mit der zweiten Pumpeinrichtung (62) verbunden ist.

7. Vorrichtung nach Anspruch 6,
**dadurch gekennzeichnet,**
**dass** diese einen Frischpulverbehälter (68) umfasst, der auf einem eigenen Fahrgestell (120) montiert ist, und der mit dem Anschluss (169) über eine Fluidverbindung verbunden ist.

8. Vorrichtung nach einem der vorstehenden Ansprüche,
**dadurch gekennzeichnet,**
**dass** die Siebeinrichtung (28) ein Ventil (58) aufweist, mit dem die Fluidverbindung (60) zu der zweiten Pumpeinrichtung (62) absperrbar ist.

9. Vorrichtung nach einem der vorstehenden Ansprüche,
**dadurch gekennzeichnet,**
**dass** die Vibrationsplattform (12) in einem Schacht (108) angeordnet ist, wobei sich an einer insbesondere rückwärtigen Schachtwand eine Absaugöffnung (46) befindet, die mit der ersten Pumpeinrichtung (32) in Fluidverbindung steht.

10. Vorrichtung nach einem der vorstehenden Ansprüche,
**dadurch gekennzeichnet,**
**dass** zwischen der Aufnahme (66) und dem Pulversammler (18) eine eigene Fluidverbindung (84) vorhanden ist.

11. Vorrichtung nach einem der vorstehenden Ansprüche,
**dadurch gekennzeichnet,**
**dass** die Siebeinrichtung (28) mit der ersten Pumpeinrichtung (32) über eine durch ein Ventil (76) absperrbare Fluidverbindung (74, 36, 42) in Verbindung steht, in der ein Fliehkraftabscheider (38) angeordnet ist, der insbesondere mit einem Abfallbehälter (80) versehen ist.

12. Vorrichtung nach einem der vorstehenden Ansprüche,
**dadurch gekennzeichnet,**
**dass** die Siebeinrichtung (28) mit einer Vibrationseinrichtung (52) und/oder einem Ultraschallerzeuger (54) versehen ist.

13. Vorrichtung nach einem der vorstehenden Ansprüche,
**dadurch gekennzeichnet,**
**dass** in einer Fluidverbindung (20, 30, 36, 42) zwischen dem Pulversammler (18) und der ersten Pumpeinrichtung (32) ein Absperrventil (34) vorgesehen ist.

14. Vorrichtung nach einem der vorstehenden Ansprüche,
**dadurch gekennzeichnet,**
**dass** sämtliche Pulver führenden Bauteile geerdet sind.

15. Vorrichtung nach Anspruch 5,
**dadurch gekennzeichnet,**
**dass** diese eine Steuerung (69) aufweist, mit der die erste und die zweite Pumpeinrichtung (32, 62) in Abhängigkeit von einem Ausgangssignal der Wägeeinrichtung (67) steuerbar sind.
